# EUROPÄISCHE PATENTSCHRIFT

(11) **EP 0 482 447 B1**
(45) Veröffentlichungstag und Bekanntmachung des Hinweises auf die Patenterteilung: **02.01.1997**
(21) Anmeldenummer: 91117352.4
(22) Anmeldetag: 11.10.1991
(51) Int. Cl.: G01N 11/08, G01N 15/06

(54) **Verfahren zur Bestimmung des gelösten Feststoffanteils in einer Lösung**
Method of determining the content of solid matter dissolved in a solution
Procédé de mesure pour déterminer la teneur de matière solide dissoute dans une solution

(30) Priorität: 24.10.1990 DE 4033702
(43) Veröffentlichungstag der Anmeldung: 29.04.1992
(73) Patentinhaber: BASF Lacke + Farben AG, 48165 Münster-Hiltrup (DE)
(72) Erfinder: Hoffmann, Horst, Dr., W-6702 Bad Duerkheim (DE); Zuerger, Manfred, W-6920 Sinsheim (DE); Holl, Norbert, W-6719 Battenberg (DE); Batu, Georg, W-6702 Bad Duerkheim (DE)
(74) Vertreter: Langfinger, Klaus-Dieter, Dr.

(56) Entgegenhaltungen:
- DE-B- 2 250 547
- DE-U- 8 601 960
- US-A- 3 506 564
- US-A- 3 512 397
- US-A- 4 386 518
- ADVANCES IN INSTRUMENTATION AND CONTROL Bd. 44, Nr. 1, 1989, RESEARCH TRIANGLE PARK US Seiten 365 - 377 P.J. COSTELLO 'Closed loop control of high-speed printing presses'

## Beschreibung

Die Erfindung betrifft ein Verfahren zur Bestimmung des gelösten Feststoffanteils in einer Lösung bei der Herstellung von Flexo-Druck-Klischees.

Bei der Herstellung von Flexo-Druck-Klischees ist es notwendig, den jeweiligen Sättigungsgrad an Feststoffanteilen des Auswaschmittels zu kennen.

Wird eine unbehandelte Rohplatte ultraviolettem Licht ausgesetzt, bilden sich durch Polymerisation Riesenmoleküle, die die Polymerschicht netzartig durchdringen und sie gegen Auswaschmittel unlöslich machen. Unbelichtete Zonen polymerisieren dagegen nicht. Sie werden mit Auswaschmittel aus der belichteten Rohplatte entfernt.

Deckt man die Rohplatte vor dem Belichten mit einer fotographisch hergestellten Negativfolie ab, so erhält man durch Belichten und Auswaschen ein exaktes Druckrelief, auch Druck-Klischees genannt. Nach einer bestimmten Trocknungszeit bei erhöhter Temperatur wird die Druckplatte abschließend nachbehandelt, wodurch die Reliefschicht ihre Klebrigkeit verliert und die Druckplatte zum Drucken eingesetzt werden kann.

Die in Rede stehende Erfindung bezieht sich auf den Verarbeitungsschritt des Auswaschens. Mit zunehmender Anzahl der ausgewaschenen Druckplatten erhöht sich der im Auswaschmittel gelöste Feststoffanteil. Die Aggressivität des Auswaschmittels gegenüber dem unbelichteten Klischeeanteil nimmt damit stetig ab. Dies hat zur Folge, daß die Auswaschzeit mit ansteigendem Feststoffgehalt verlängert werden muß.

Die richtige Einschätzung des jeweiligen Feststoffgehaltes erfordert deshalb vom Bedienungspersonal ein ständiges Beobachten des Waschvorganges mit entsprechender Korrektur der Auswaschzeit. Wird die Platte "überwaschen", das heißt zu lange dem Auswaschmittel ausgesetzt bei gleichzeitigem Bürsten, so treten Reliefschäden auf, die die Druckplatte unbrauchbar machen.

Wird andererseits die Auswaschzeit zu kurz gewählt, muß wegen ungenügender Relieftiefe die Druckplatte nachgewaschen werden. Die Kenntnis des exakten Feststoffgehaltes bzw. die optimale Auswaschzeit wäre für die wirtschaftliche Fertigung von großer Bedeutung. Die Bestimmung des Feststoffgehaltes erfolgt bislang durch Verdampfen einer zuvor gewogenen Auswaschmittelprobe. Das Gewichtsverhältnis von Rückstand zu frischem Auswaschmittel ergibt den Feststoffgehalt. Weil das Verdampfen mehrere Stunden dauert und zudem eine Präzisionswaage zur Gewichtsbestimmung des Rückstandes erforderlich ist, wird im praktischen Betrieb der tatsächliche Feststoffgehalt sehr selten bestimmt. Handelsübliche Viskosimeter erwiesen sich als ungeeignet, sei es wegen des Meßbereiches, der Handhabung oder des Reinigungsaufwandes.

Die US 4 386 518-A bezieht sich auf eine Vorrichtung und ein Verfahren zur Messung niedriger Konzentrationen von Polymeren mit hohem Molekulargewicht in Lösung. Wie der Tabelle in Spalte 4 zu entnehmen ist, werden hierbei nur sehr verdünnte Polymerlösungen mit Polymer-Gehalten von 1 bis 10 ppm eingesetzt,und zwar in turbulenter Strömung, wobei die "drag reduction" mit steigender Konzentration zunimmt.

Der Erfindung liegt die Aufgabe zugrunde, mit einer geeigneten Vorrichtung den Feststoffgehalt kontinuierlich, genau und in kurzer Zeit zu bestimmen.

Gegenstand der vorliegenden Erfindung ist ein Verfahren zur Bestimmung des gelösten Feststoffanteils in einer Lösung bei der Herstellung von Flexo-Druck-Klischees, das dadurch gekennzeichnet ist, daß die Lösung mittels einer Pumpe kontinuierlich durch ein Verteilerrohr und eine, dem ersten Zweig dieses Verteilerrohrs nachfolgende Kanüle, mit einem bestimmten Verhältnis Durchmesser zu Länge, gefördert wird, und der zweite Zweig des Verteilerrohrs einem elektronischen Druckumwandler zugeführt wird, wobei der Strömungsquerschnitt im Verteilerrohr wesentlich größer als der der nachfolgenden Kanüle ist, so daß sich im Verteilerrohr ein, je nach Höhe des Feststoffanteils in der Lösung, entsprechender quasi statischer Druck mit einem vernachlässigbaren dynamischen Druckanteil einstellt, welcher statische Druck nach elektronischer Umwandlung in dem Druckumwandler, temperaturkompensiert in einem Anzeigegerät digital als prozentualer Feststoffgehalt angezeigt wird.

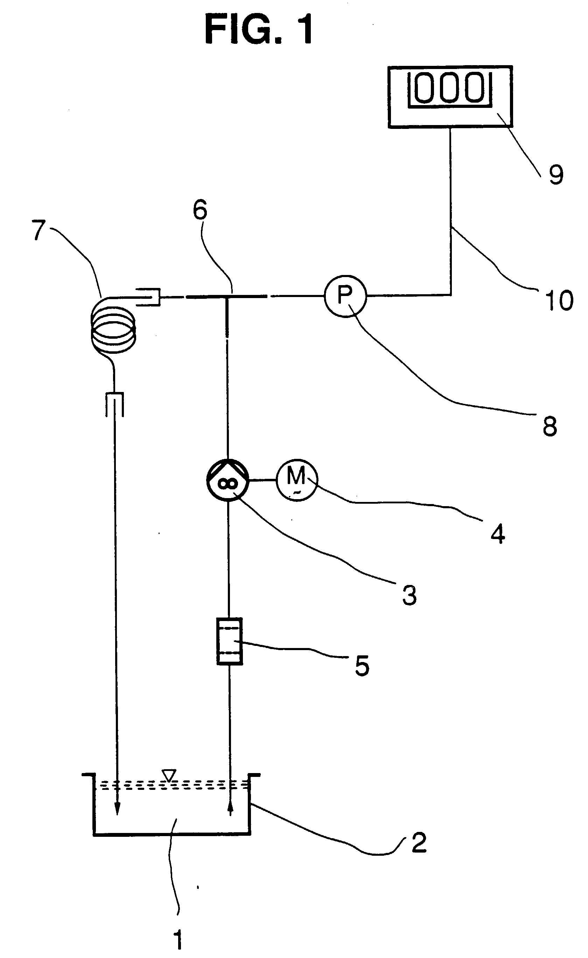

Ein Ausführungsbeispiel der Erfindung ist in der Figur 1 dargestellt und wird im folgenden näher beschrieben.

Das Auswaschmittel (1) wird aus dem Arbeitstank (2) des bekannten Waschers mit Hilfe einer Zahnradpumpe (3), die starr mit dem Antriebsmotor (4) verbunden ist, angesaugt. Eventueller nichtgelöster Feststoff wird im Filter (5) zurückgehalten. Der Strömungsquerschnitt im Verteilerrohr (6) ist wesentlich größer als der der nachfolgenden gewendelten Kanüle (7). Dadurch stellt sich im Verteilerrohr (6) ein quasi statischer Druck ein (mit vernachlässigbarem dynamischen Druckanteil), der vom elektronischen Druckumwandler (8) temperaturkompensiert digitalisiert wird und im Anzeigegerät (9) als prozentualer Feststoffgehalt des Auswaschmittels angezeigt wird. Das Anzeigegerät, das mit einem Kabel (10) mit dem Druckumwandler verbunden ist, wird zweckmäßigerweise im Bedienungspult des Waschers installiert.

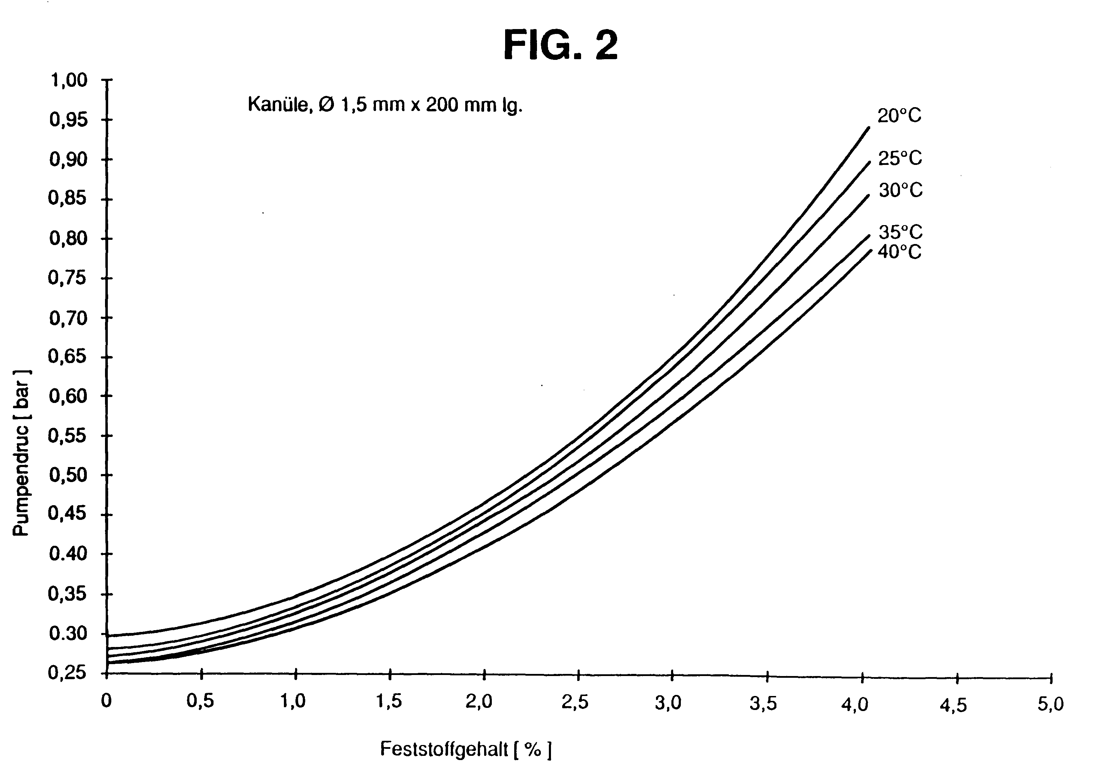

Als gut geeignet, da selbstreinigend, erwies sich eine Kanüle mit d = 1,5 mm Durchmesser und L = 200 mm Länge. Den Druck vor der Kanüle in Abhängigkeit vom Feststoffgehalt und der Temperatur des Auswaschmittels zeigt Figur 2.

Die mit der Erfindung erzielbaren Vorteile bestehen insbesondere in der einfachen Bedienung, der sofortigen Anzeige des aktuellen Zustandes des Auswaschmittels und dem einfachen praxisgerechten Meßverfahren. Ferner kann das Meßgerät in einen Regelkreis integriert werden zur selbsttätigen Regelung, d.h. Konstanthaltung des Feststoffgehaltes beim Waschprozeß, was zur Verfahrenssicherheit bzw. zu konstanter Auswaschqualität führt.

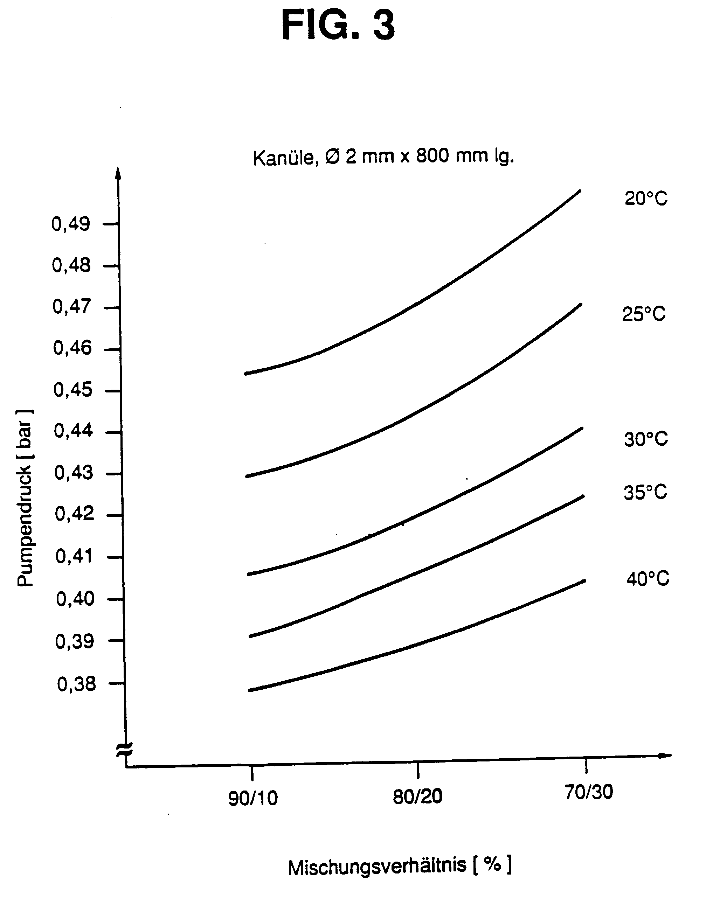

Wird bei diesem Meßgerät eine Kanüle mit höherem Strömungswiderstand eingesetzt, beispielsweise d = 2 mm und L = 800 mm, so läßt sich beim frischen unbenutzten Auswaschmittel die Zusammensetzung der beiden Lösemittelkomponenten überprüfen bzw. korrigieren. Abb. 3 zeigt die Abhängigkeit des Druckes vor der Kanüle vom prozentualen Mischungsverhältnis der Komponenten und der Temperatur.

## Patentansprüche

1. Verfahren zur Bestimmung des gelösten Feststoffanteils in einer Lösung bei der Herstellung von Flexo-Druck-Klischees, dadurch gekennzeichnet, daß die Lösung mittels einer Pumpe kontinuierlich durch ein Verteilerrohr und eine, dem ersten Zweig dieses Verteilerrohrs nachfolgende Kanüle, mit einem bestimmten Verhältnis Durchmesser zu Länge, gefördert wird, und der zweite Zweig des Verteilerrohrs einem elektronischen Druckumwandler zugeführt wird, wobei der Strömungsquerschnitt im Verteilerrohr wesentlich größer als der der nachfolgenden Kanüle ist, so daß sich im Verteilerrohr ein, je nach Höhe des Feststoffanteils in der Lösung, entsprechender quasi statischer Druck mit einem vernachlässigbaren dynamischen Druckanteil einstellt, welcher statische Druck nach elektronischer Umwandlung in dem Druckumwandler, temperaturkompensiert in einem Anzeigegerät digital als prozentualer Feststoffgehalt angezeigt wird.

2. Verfahren nach Anspruch 1, dadurch gekennzeichnet, daß das Meßgerät zur Konstanthaltung des Feststoffgehaltes beim Waschprozeß in einem Regelkreis integriert ist.

## Claims

1. A process for determining the dissolved solids fraction in a solution in the preparation of flexographic printing plates, wherein the solution is conveyed by means of a pump continuously through a distributor tube and a cannula which is downstream of the first branch of this distributor tube and has a certain diameter-to-length ratio, and the second branch of the distributor tube is led to an electronic pressure converter, the flow cross-section of the distributor tube being substantially greater than that of the downstream cannula, so that, depending on the magnitude of the solids fraction in the solution, a corresponding quasi-static pressure having a negligible dynamic pressure component is established in the distributor tube, which static pressure, after electronic conversion in the pressure converter, is displayed in temperature-compensated form and digitally as a percentage solids content in a display.

2. A process as claimed in claim 1, wherein the measuring apparatus for keeping the solids content constant during the wash process is integrated in a control loop.

## Revendications

1. Procédé pour la détermination de la fraction de solides dissous dans une solution lors de la préparation de clichés flexographiques, caractérisé par le fait que la solution est transportée au moyen d'une pompe en continu par une conduite de répartition et une canule disposée à la suite de la première branche de cette conduite de répartition, ayant un rapport déterminé entre diamètre et longueur, et la seconde branche de la conduite de répartition est raccordée à un convertisseur de pression électronique, tandis que la section d'écoulement de la conduite de répartition est nettement supérieure à celle de la canule subséquente, si bien qu'il s'établit dans la conduite de répartition une pression quasi-statique correspondante, qui est fonction de la hauteur de la fraction de solides dans la solution, avec une fraction de pression dynamique négligeable, laquelle pression statique est indiquée après conversion électronique dans le convertisseur de pression, avec compensation de température, dans un appareillage d'affichage, en numérique, sous la forme du pourcentage de la teneur en solides.

2. Procédé selon la revendication 1, caractérisé par le fait que l'appareil de mesure pour maintenir constante la teneur en solides dans le processus de lavage est intégré dans une boucle d'asservissement.
